# EUROPEAN PATENT APPLICATION

(11) **EP 1 046 687 A1**
(43) Date of publication of application: **25.10.2000**
(21) Application number: 00401114.4
(22) Date of filing: 20.04.2000
(51) Int. Cl.: C09D 11/00, C09D 11/16

(54) **Fluorescent ink composition**

(30) Priority: 20.04.1999 JP 11177499
(71) Applicant: SEIKO EPSON CORPORATION, Shinjuku-ku Tokyo-to (JP)
(72) Inventor: Miyabayashi, Toshiyuki, c/o Seiko Epson Corp., Suwa-shi, Nagano-ken (JP)
(74) Representative: Uchida, Kenji

(57) **Abstract**

A fluorescent ink composition is provided which can realize images having excellent fluorescence intensity and rubbing/scratch resistance and, in addition, when used in ink jet recording, can realize, on a high level, anti-clogging properties, ejection stability, storage stability and other various properties required of ink compositions for ink jet recording. The ink composition comprises a fluorescent colorant, water, a water-soluble organic solvent, and polymeric fine particles having a film-forming property.

## Description

### BACKGROUND OF THE INVENTION

### Field of the Invention

The present invention relates to an ink composition which can yield fluorescent prints, and more particularly to an ink composition which can yield fluorescent prints and is preferably used with ink jet recording.

### Background Art

Fluorescent prints refer to prints which can be perceived as a result of light emission upon exposure to excitation light such as ultraviolet light. Fluorescent prints include fluorescent prints per se and, in addition, prints comprising a general print, perceivable upon exposure to visible light, having thereon a fluorescent print portion perceivable upon exposure to ultraviolet light or the like. The latter fluorescent prints are effective in preventing forgery because the fluorescent print portion is not generally perceivable when irradiated with visible light. More specifically, the latter fluorescent prints are useful as means for preventing forgery of securities, commuter passes or season tickets, identification cards or papers, etc. Further, fluorescent prints are not detrimental to the appearance of prints which are generally perceivable when exposed to visible light. Therefore, fluorescent prints can be provided for article perception purposes in production processes or for marking purposes for automatic article identification in use of the article. What is important to such fluorescent prints is to stably provide satisfactory fluorescence intensity.

The formation of fluorescent prints by ink jet recording has also been proposed. Ink jet recording is a printing method wherein droplets of an ink composition are ejected and deposited onto recording media, such as papers, to perform printing. This method has a feature that images having high resolution and high quality can be printed at a high speed by means of relatively inexpensive apparatuses. In the case of recording media such as papers, the recording media absorb the ink composition to permit images to be fixed onto the recording media. In this case, the colorant component penetrates into the recording media to some extent. By virtue of this penetration phenomenon, the formed prints have rubbing/scratch resistance. The penetration of the colorant to a larger extent than is required leads to a fear of the fluorescence intensity becoming unsatisfactory.

### SUMMARY OF THE INVENTION

The present inventors have now found that a fluorescent ink composition containing polymeric fine particles in combination with a fluorescent colorant can realize images having satisfactory fluorescence intensity and excellent rubbing/scratch resistance and, in addition, can realize, on a high level, various properties required of fluorescent ink compositions. The present invention has been made based on such finding.

Accordingly, it is an object of the present invention to provide an ink composition which can realize images having excellent fluorescence intensity and rubbing/scratch resistance.

It is another object of the present invention to provide an ink composition which can realize, on a high level, anti-clogging properties, ejection stability, storage stability and other various properties required of ink compositions used in ink jet recording.

According to a first aspect of the present invention, there is provided an ink composition comprising a fluorescent colorant, water, a water-soluble organic solvent, and polymeric fine particles having a film-forming property.

According to a second aspect of the present invention, there is provided an ink composition comprising the ink composition according to the first aspect of the present invention, the fluorescent colorant being colorless in the state of exposure to visible light, the ink composition further comprising a colorant which is colored in the state of exposure to visible light.

### DESCRIPTION OF THE PREFERRED EMBODIMENTS

### Ink composition

The ink compositions according to the present invention may be used in recording methods using an ink composition. Recording methods using an ink composition include, for example, an ink jet recording method, a recording method using writing utensils, such as pens, and other various printing methods. Particularly preferably, the ink compositions according to the present invention is used in the ink jet recording method.

The ink composition according to the first aspect of the present invention basically comprises a fluorescent colorant, water, a water-soluble organic solvent, and polymeric fine particles.

### Fluorescent colorant

The fluorescent colorant contained in the ink composition according to the present invention refers to a colorant which fluoresces upon exposure to excitation light. The fluorescent colorant may be either colored or colorless in the state of exposure to visible light. In the ink composition according to the second aspect of the present invention, a fluorescent colorant is used which is colorless in the state of exposure to visible light. Further, the fluorescent colorant may be either a fluorescent dye or a fluorescent pigment.

Examples of such fluorescent colorants include: stilbene colorants, such as diaminostilbenesulfonic acid and distilbene; diaminodiphenyl colorants, such as benzidine, benzidinesulfonic acid, and diaminofluorene; imidazole colorants, such as imidazolone and triazole; thiazole colorants; oxazole colorants; coumarin colorants; carbostyril colorants; naphthalimide colorants; pyrazolone colorants; dihydropyridine colorants; and other fluorescent dyes. Specific examples thereof include C.I. Fluorescent Brightening Agent 14, 24, 30, 32, 52, 54, 69, 79, 84, 85, 86, 87, 90, 104, 112, 113, 114, 119, 121, 134, 135, 152, 166, 167, 168, 169, 191, 192, 201, 204, 214, 216, 217, 218, 223, 226, 229, 234, 236, 239, 240, 242, 257, 260, 271, 290, 310, 311, 312, 314, and 315, C.I. Basic Red 1 and 1-1, C.I. Basic Violet 10 and 11 : 1, C.I. Basic Yellow 35, 40, and 95, C.I. Basic Blue 7, p-quaterphenyl, p-terphenyl, 2,5-diphenyloxazole, 2-(1-naphthyl)-5-phenyloxazole, 2-phenyl-5-(4-biphenyl)-1,3,4-oxadiazole, 3-phenyl-7-(1,2-2H-naphthotriazolyl)-coumarin, 3,7-bis(diethylamino)-phenoxazonium nitrate, 3,7-bis(diethylamino)phenoxazonium nitrate, europium-thenoyltrifluoroacetone chelate, DTTCI, HDITCI, IR-125, IR-132, IR-140, H.I.D.C. iodide, Basic Yellow, and Rhodamine B.

Commercially available fluorescent colorants may also be utilized, and specific examples thereof include colorless fluorescent dyes, such as EB-501 (emission color: blue), EG-302 (emission color: yellowish green), EG-307 (emission color: green), ER-120 (emission color: red), andER-122 (emission color: red) (all the above products being manufactured by Mitsui Dyes Limited), Uvitex OB (manufactured by Ciba-Geigy Limited; emission color: blue), and europium-thenoyltrifluoroacetone chelate (manufactured by Sinloihi Co., Ltd.; emission color: reddish orange). Color fluorescent dyes include Cation Brilliant Flavin (emission color: yellow), Cation Brilliant Red (emission color: red), Cation Brilliant Pink (emission color: pink), Spilon Yellow (emission light: yellow), and Spilon Red (emission color: red) (all the above products being manufactured by Hodogaya Chemical Co., Ltd.).

As described later, according to a preferred embodiment of the present invention, the fluorescent colorant is in any of a form (1) wherein the fluorescent colorant is present in a state that the polymeric fine particles and the ink composition exist individually, a form (2) wherein the fluorescent colorant is physically mixed into the polymeric fine particles, a form (3) wherein the fluorescent colorant is chemically bonded to the polymer constituting the polymeric fine particles.

The content of the fluorescent colorant in the ink composition according to the present invention is preferably about 0.001 to 10% by weight, more preferably about 0.01 to 5% by weight.

In the ink composition according to the second aspect of the present invention, the colorant, which is colored in the state of exposure to visible light, is not particularly limited and may be any colorant commonly used in ink compositions. According to the second aspect of the present invention, on one hand, colorants capable of realizing good image quality in the state of exposure to visible light and other formulations of the ink composition may be selected, and, on the other hand, images yielded by the fluorescent colorant can be perceived by irradiation with light having a specific wavelength. By virtue of this constitution, a judgment can be formed on whether the print is true or false. Therefore, this is effective in preventing the forgery of prints.

According to a preferred embodiment of the present invention, in the ink composition according to the second aspect of the present invention, the content ratio of the fluorescent colorant to the colorant, which is colored in the state of exposure to visible light, is in the range of 0.1 : 100 to 100 : 100.

### Polymeric fine particles

According to the present invention, the polymeric fine particles contained in the ink composition has a film-forming property. The term "film-forming property" as used herein means that evaporating the water component of an aqueous emulsion of the polymeric fine particles dispersed in water results in the formation of a resin film. Likewise, the ink composition with the polymeric fine particles added thereto has a property such that evaporating the solvent component results in the formation of a resin film. This resin film functions to strongly fix the fluorescent colorant contained in the ink composition onto the surface of recording media. This is considered to realize images having satisfactory fluorescence intensity and excellent rubbing/scratch resistance and waterfastness. These excellent properties can be advantageously developed independently of the type of recording media.

According to a preferred embodiment of the present invention, the polymeric fine particles have a diameter of not more than 0.4 µm, more preferably about 0.005 to 0.3 µm.

The content of the polymeric fine particles in the ink composition according to the present invention is generally about 0.1 to 20% by weight, preferably about 1 to 10% by weight, more preferably 1 to 5% by weight, based on the ink composition.

According to a preferred embodiment of the present invention, the polymeric fine particles have a single-particle structure. According to another preferred embodiment of the present invention, the polymeric fine particles have a core/shell structure comprising a core and a shell layer surrounding the core.

According to a preferred embodiment of the present invention, the polymeric fine particles are dispersed as dispersed particles of a polymer emulsion in the ink composition. That is, in the preparation of the ink composition according to the present invention, the polymeric fine particles are preferably mixed, in the form of a polymer emulsion, with ingredients constituting the ink composition. According to a preferred embodiment of the present invention, the diameter of the polymeric fine particles contained in the polymer emulsion is preferably about not more than 0.4 µm, more preferably about 0.005 to 0.3 µm.

According to a preferred embodiment of the present invention, the polymer constituting the polymeric fine particles has a glass transition temperature of 30°C or below. The use of this polymer permits the ink composition according to the present invention to surely form a film at room temperature.

According to a preferred embodiment of the present invention, when the polymeric fine particles are dispersed in the form of dispersed particles of a polymer emulsion in the ink composition, the polymer emulsion preferably has a minimum film-forming temperature of 30°C or below. The term "minimum film-forming temperature" used herein refers to a minimum temperature at which, when a polymer emulsion is thinly cast onto a sheet of a metal, such as aluminum, to form a coating which is then gradually heated, a transparent, continuous film is formed. In this case, a white powder is formed in a temperature region below the minimum film-forming temperature. Further, this embodiment can improve fast drying, drying to the touch, rubbing/scratch resistance, and waterfastness of prints.

According to a preferred embodiment of the present invention, the polymeric fine particles comprise a thermoplastic polymer. Further, the polymer may be a crosslinked one. Examples of thermoplastic polymers usable herein include, but are not limited to, poly(meth)acrylic esters, polystyrenes, (meth)acrylic ester/styrene copolymers, polyvinyl acetates, ethylene/vinyl acetate copolymers, ethylene/(meth)acrylic ester copolymers, polybutadienes, polyisoprenes, polyvinyl chlorides, polyvinylidene chlorides, poly( α -methylstyrene), styrene/butadiene copolymers, (meth)acrylic acid/styrene copolymers, styrene/maleic acid copolymers, styrene/itaconic acid copolymers, styrene/maleic ester copolymers, styrene/itaconic ester copolymers, polyesters, polyurethanes, polysiloxanes, and polyamides.

The polymeric fine particles used in the present invention may be produced as follows. At the outset, when the fluorescent colorant is in a form such that a fluorescent colorant has been physically mixed into the polymeric fine particles, physical mixing of a fluorescent colorant into the polymeric fine particles can be achieved by applying physical energy to polymeric fine particles, produced by a method described later, together with a fluorescent colorant, or by allowing a fluorescent colorant to exist in a system in the production of polymeric fine particles. When the fluorescent colorant is in the state of being chemically bonded to a polymer constituting the polymeric fine particles, this form of fluorescent colorant may be produced by polymerizing the corresponding monomer having a functional group by a suitable polymerization method, for example, emulsion polymerization, to prepare a polymer and introducing a fluorescent colorant into the functional group.

The polymeric fine particles used in the present invention are preferably produced by conventional emulsion polymerization. Specifically, the polymeric fine particles may be produced by emulsion polymerization of the monomer component in water in the presence of a polymerization catalyst and an emulsifier. Emulsifiers usable herein include anionic surfactants, nonionic surfactants, and mixtures of these surfactants. Anionic surfactants include alkylsulfonic acid salts, alkylsulfone sulfates, alkylbenzenesulfonic acid salts, alkylnaphthalenesulfonic acid salts, alkylbenzenesulfone sulfates, dialkylsulfosuccinic acid salts, fatty acid salts, polyoxyethylene alkyl ether sulfates, and polyoxyethylene phenyl ether sulfates. Nonionic surfactants usable herein include polyoxyethylene alkyl ethers, polyoxyethylene alkyl phenyl ethers, polyoxyethylene-polystyryl phenyl ethers, polyoxyethylene-polyoxypropylene glycol, polyoxyethylene-polyoxypropylene alkyl ethers, polyoxyethylene fatty acid esters, and polyglycerin fatty acid esters. This emulsion polymerization is a preferred method for the production of polymeric fine particles in a polymer emulsion form. According to a preferred embodiment of the present invention, the surfactant has an HLB value of 15 to 20 from the viewpoint of producing a stable polymer emulsion.

The monomer used in the above production method is not particularly limited so far as the monomer can provide the above polymer constituting the polymeric fine particles. Specific examples thereof include: vinyl esters, for example, acrylic esters or methacrylic esters, such as methyl (meth)acrylate, ethyl (meth)acrylate, isopropyl (meth)acrylate, n-butyl (meth)acrylate, isobutyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, cyclohexyl (meth)acrylate, phenyl (meth)acrylate, benzyl (meth)acrylate, 2-hydroxylethyl (meth)acrylate, 2-hydroxypropyl (meth)acrylate, glycidyl methacrylate, and glycidyl acrylate, and vinyl acetate; acrylonitrile, methacrylonitrile and the like; aromatic vinyl compounds, such as styrene, 2-methylstyrene, vinyltoluene, t-butylstyrene, chlorostyrene, vinylanisole, vinylnaphthalene, and divinylbenzene; halogenated vinylidenes, such as vinylidene chloride and vinylidene fluoride; ethylene, propylene, isopropylene, butadiene, vinylpyrrolidone, vinyl chloride, vinyl ether, vinyl ketone, chloroprene and the like, and carboxyl-containing compounds, for example, ethylenically unsaturated carboxylic acids, such as acrylic acid, methacrylic acid, maleic acid, or monoalkyl esters thereof, itaconic acid or monoalkyl esters thereof, fumaric acid or monoalkyl esters thereof; amido-containing compounds, such as acrylamide and N,N-dimethylacrylamide, and alkylamino esters of acrylic acid or methacrylic acid, for example, amino-containing compounds, such as N-methylaminoethyl methacrylate, N-methylaminoethyl acrylate, dimethylaminoethyl methacrylate, dimethylaminoethyl acrylate, diethylaminoethyl methacrylate, and diethylaminoethyl methacrylate; unsaturated amides containing an alkylamino group, such as N-(2-dimethylaminoethyl)acrylamide, N-(2-dimethylaminoethyl)methacrylamide, and N,N-dimethylaminopropylacrylamide, monovinylpyridines, such as vinylpyridine, and vinyl ethers containing an alkylamino group, such as dimethylaminoethyl vinyl ether; and vinylimidazole and the like and compounds containing a sulfonic group, such as vinylsulfonic acid, styrenesulfonic acid and salts thereof and 2-acryloylamino-2-methylpropanesulfonic acid and salts thereof. These monomers may be used alone or as a mixture of two or more.

According to a preferred embodiment of the present invention, the polymeric fine particles may have a single-particle structure or a core/shell structure. The polymeric fine particles having a core/shell structure may be generally produced, for example, by multi-step emulsion polymerization.

According to a preferred embodiment of the present invention, both the polymeric fine particles having a single-particle structure and the polymeric fine particles having a core/shell structure have a carboxyl or sulfonic acid functional group, or have an amido, hydroxyl, or amino functional group. In the case of the core/shell structure, these functional groups are preferably present in the shell layer. Further, in the above production method, these groups may be present in the structure of the monomer, or alternatively may be added, for example, by graft polymerization, on the surface of polymeric fine particles after the production of the polymeric fine particles. The presence of such functional groups is considered preferable from the viewpoint of the following expected mechanism. However, it should be noted that the following mechanism is merely hypothetical and does not limit the present invention. Hydrophilic groups, such as carboxyl, sulfonic acid, amido, amino, or hydroxyl groups, present on the surface of polymer particles are bonded to hydroxyl groups (OH groups) of cellulose constituting paper fibers through hydrogen bond to strongly adsorb the polymeric fine particles onto the paper fibers. As a result, the penetration of the fluorescent colorant into the paper is suppressed. In particular, when the polymeric fine particles have a core/shell structure which contains a hydrophilic group, such as a carboxyl, sulfonic acid, amido, amino, or hydroxyl group, in its shell layer, the proportion of these hydrophilic groups present on the surface of the polymeric fine particles is enhanced. This can provide better effect. Water and the water-soluble organic solvent around polymeric fine particles adsorbed onto paper fibers penetrate into the paper, and, hence, the amount thereof is reduced. This permits the polymeric fine particles to coalesce with and fuse to one another to form a film. In this case, the fluorescent colorant is incorporated into the fused polymeric fine particles. The ink composition containing polymeric fine particles having these groups does not wet the surface of a nozzle plate in a recording head of an ink jet printer, which nozzle plate has been subjected to water repellency-imparting treatment. Consequently, unfavorable phenomena derived from wetting of the surface of the nozzle plate by the ink composition, such as a failure of the recording head to eject ink and ink droplet trajectory directionality problem, do not occur, and the ejection stability is excellent. In addition, the ink composition containing polymeric fine particles having these groups have excellent storage stability.

### Water-soluble organic solvent

The ink composition according to the present invention contains a water-soluble organic solvent. The water-soluble organic solvent is preferably a low-boiling organic solvent, and examples thereof include methanol, ethanol, n-propyl alcohol, iso-propyl alcohol, n-butanol, sec-butanol, tert-butanol, iso-butanol, and n-pentanol. Monohydric alcohols are particularly preferred. The low-boiling organic solvent has the effect of shortening the drying time of the ink. The amount of the low-boiling organic solvent added is preferably 0.1 to 30% by weight, more preferably 5 to 10% by weight, based on the ink composition.

According to a preferred embodiment of the present invention, the ink composition according to the present invention further contains a wetting agent comprising a high-boiling organic solvent. Preferred examples of high-boiling organic solvents include: polyhydric alcohols, such as ethylene glycol, diethylene glycol, triethylene glycol, polyethylene glycol, polypropylene glycol, propylene glycol, butylene glycol, 1,2,6-hexanetriol, thioglycol, hexylene glycol, glycerin, trimethylolethane, and trimethylolpropane; alkyl ethers of polyhydric alcohols, such as ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, and triethylene glycol monobutyl ether; urea; 2-pyrrolidone; N-methyl-2-pyrrolidone; and 1,3-dimethyl-2-imidazolidinone.

The amount of the wetting agent added is preferably 0.1 to 30% by weight, more preferably 1 to 10% by weight, based on the ink composition.

According to a preferred embodiment of the present invention, when the polymeric fine particles have a glass transition point of 30°C or below, or when the polymer emulsion has a minimum film-forming temperature of 30°C or below, the use of a water-soluble organic solvent having a boiling point of 180°C or above is preferred. Examples of preferred water-soluble organic solvents include ethylene glycol (b.p.: 197°C; the boiling point being hereinafter described within parentheses), propylene glycol (187 °C ), diethylene glycol (245 °C ), pentamethylene glycol (242°C), trimethylene glycol (214°C), 2-butene-1,4-diol (235°C), 2-ethyl-1,3-hexanediol (243°C), 2-methyl-2,4-pentanediol (197°C), N-methyl-2-pyrrolidone (202°C), 1,3-dimethyl-2-imidazolidinone (257-260 °C ), 2-pyrrolidone (245°C), glycerin (290°C), tripropylene glycol monomethyl ether (243 °C ), dipropylene glycol monoethyl glycol (198 °C ), dipropylene glycol monomethyl ether (190°C), dipropylene glycol (232 °C ), triethylene glycol monomethyl ether (249 °C ), tetraethylene glycol (327 °C), triethylene glycol (288 °C), diethylene glycol monobutyl ether (230°C), diethylene glycol monoethyl ether (202°C), and diethylene glycol monomethyl ether (194°C). According to a preferred embodiment of the present invention, a solvent selected from, for example, ethylene glycol, diethylene glycol, pentamethylene glycol, trimethylene glycol, 2-butene-1,4-diol, 2-ethyl-1,3-hexanediol, 2-methyl-2,4-pentanediol, glycerin, dipropylene glycol, tetraethylene glycol, triethylene glycol, N-methyl-2-pyrrolidone, 1,3-dimethyl-2-imidazolidinone, and 2-pyrrolidone, is used as the high-boiling, water-soluble solvent.

According to a preferred embodiment of the present invention, the ink composition according to the present invention contains a saccharide, a tertiary amine, an alkali hydroxide, or ammonia. The addition of these compounds can provide an ink composition which causes neither agglomeration of the colorant nor an increase in viscosity of the colorant even after storage for a long period of time, that is, possesses excellent storage stability, and, even when allowed to stand in an open state (that is, when allowed to stand in contact with air at room temperature), can maintain the fluidity and the redispersibility for a long period of time, and, in addition, does not cause clogging of nozzles during printing or at the time of restarting after interruption of printing, thus offering high ejection stability.

Saccharides, which may be added to the ink composition according to the present invention, include monosaccharides, disaccharides, oligosaccharides (including trisaccharides and tetrasaccharides), and polysaccharides, and preferred examples thereof include glucose, mannose, fructose, ribose, xylose, arabinose, galactose, aldonic acid, glucitol, sorbit, maltose, cellobiose, lactose, sucrose, trehalose, and maltotriose. The polysaccharides refer to saccharides in a wide sense and embrace materials which widely exist in the natural world, such as alginic acid, α-cyclodextrin, and cellulose. Derivatives of these saccharides include reducing sugars of the above saccharides (for example, sugar alcohols represented by the general formula HOCH₂(CHOH)ₙCH₂OH wherein n is an integer of 2 to 5), oxidized sugars (for example, aldonic acid and uronic acid), amino acid, and thiosugars. Sugar alcohols are particularly preferred, and specific examples thereof include maltitol and sorbit.

The content of the saccharide is generally 0.1 to 40% by weight, preferably 1 to 30% by weight, based on the ink composition.

Examples of tertiary amines, which may be added to the ink composition according to the present invention, include trimethylamine, triethylamine, triethanolamine, dimethylethanolamine, diethylethanolamine, triisopropenolamine, and butyldiethanolamine. They may be used alone or in combination of two or more. The amount of the tertiary amine added to the ink composition according to the present invention is generally 0.1 to 10% by weight, preferably 0.5 to 5% by weight.

Examples of alkali hydroxides, which may be added to the ink composition of the present invention, include potassium hydroxide, sodium hydroxide, and lithium hydroxide, and the amount of the alkali hydroxide added to the ink composition according to the present invention is 0.01 to 5% by weight, preferably 0.05 to 3% by weight.

The ink composition according to the present invention may further comprise a surfactant. Examples of surfactants usable herein include anionic surfactants (for example, sodium dodecylbenzenesulfonate, sodium laurylate, and an ammonium salt of polyoxyethylene alkyl ether sulfates), nonionic surfactants (for example, polyoxyethylene alkyl ethers, polyoxyethylene alkyl esters, polyoxyethylene sorbitan fatty acid esters, polyoxyethylene alkylphenyl ethers, polyoxyethylenealkylamines, and polyoxyethylenealkylamides), and acetylene glycol (OLFINE Y and Surfynol 82, 104, 440, 465, and 485) (all the above products being manufactured by Air Products and Chemicals Inc.). They may be used alone or in combination of two or more.

The ink composition according to the present invention may further comprise, in addition to the above polymeric fine particles, general-purpose polymeric fine particles which are preferably in the form of a polymer emulsion. Examples of general-purpose polymeric fine particles usable in the present invention include fine particles of acrylic polymer, vinyl acetate polymer, styrene/butadiene copolymer, vinyl chloride polymer, (meth)acrylate/styrene copolymer, butadiene polymer, and styrene polymer. The diameter of the fine particles of these polymers is preferably not more than about 0.4 µm, more preferably about 0.005 to 0.3 µm. Further, polymeric fine particles commercially available as a polymer emulsions may also be used, and examples thereof include Microgel E-1002 and E-5002 (emulsion of styrene/acrylic polymer, manufactured by Nippon Paint Co., Ltd.), Voncoat 4001 (emulsion of acrylic polymer, manufactured by Dainippon Ink and Chemicals, Inc.), Voncoat 5454 (emulsion of styrene/acrylic polymer, manufactured by Dainippon Ink and Chemicals, Inc.), SAE-1014 (emulsion of styrene/acrylic polymer, manufactured by Nippon Zeon Co., Ltd.), and Saivinol SK-200 (emulsion of acrylic polymer, manufactured by Saiden Chemical Industry Co., Ltd).

If necessary, pH adjustors, preservatives, antimolds, phosphorus antioxidants and other additives may be added to the ink composition according to the present invention.

### EXAMPLES

### Preparations of polymeric fine particles

### Preparation 1

Deionized water (100 g) was charged into a three-necked flask equipped with a condenser tube, an agitator, and a dropping funnel, and the system was heated to an internal temperature of 70°C in a nitrogen atmosphere. An aqueous solution of 3 g of potassium persulfate previously dissolved in 50 g of deionized water was added dropwise to the flask over a period of 2 hr. Separately, 60 g of styrene, 10 g of methacrylic acid, and 130 g of tridecyl methacrylate were added to a solution of 5 g of sodium dodecylbenzenesulfonate dissolved in 200 g of deionized water, followed by stirring to prepare an emulsion. This emulsion was added dropwise to the flask over a period of 2 hr, and the polymerization was terminated 5 hr after the completion of the dropwise addition of the emulsion. pH of the system was then adjusted by the addition of aqueous ammonia as a neutralizing agent, followed by filtration through a 0.4-µm filter. The filtrate was diluted with distilled water to bring the concentration of the polymeric fine particles to 30%. Thus, a polymer emulsion containing polymeric fine particles as dispersed particles was prepared. This polymer emulsion had a minimum film-forming temperature of about -5°C.

### Preparation 2

Deionized water (100 g) was charged into a three-necked flask equipped with a condenser tube, an agitator, and a dropping funnel, and the system was heated to an internal temperature of 70°C in a nitrogen atmosphere. An aqueous solution of 3 g of potassium persulfate previously dissolved in 50 g of deionized water was added dropwise to the flask over a period of 2 hr. Separately, 60 g of styrene, 10 g of methacrylic acid, and 130 g of tridecyl methacrylate were added to a solution of 5 g of sodium dodecylbenzenesulfonate dissolved in 200 g of deionized water, followed by stirring. Further, 15 g of EB 501 manufactured by Mitsui Chemicals Inc. was added to prepare an emulsion. This emulsion was added dropwise to the flask over a period of 2 hr, and the polymerization was terminated 5 hr after the completion of the dropwise addition of the emulsion. pH of the system was then adjusted by the addition of aqueous ammonia as a neutralizing agent, followed by filtration through a 0.4-µm filter. The filtrate was diluted with distilled water to bring the concentration of the polymeric fine particles to 30%. Thus, a polymer emulsion containing polymeric fine particles as dispersed particles was prepared. This polymer emulsion had a minimum film-forming temperature of about -5°C.

### Preparation 3

1,3,3-Trimethyl-spiro(indoline-2,3'[3H]-9'-hydroxynaphtho[2,1-b][1,4]oxazine was prepared by the method described in U.S. Patent No. 4636561. Next, this compound in its hydroxyl group was reacted with glycidyl methacrylate in its epoxy group by the method described in Kakishita et al., Kobunshi Ronbunshu (Japanese Journal of Polymer Science and Technology) 61, 51 (1994), to prepare a methacryloyl-containing fluorescent colorant A.

Deionized water (100 g) was charged into a three-necked flask equipped with a condenser tube, an agitator, and a dropping funnel, and the system was heated to an internal temperature of 70°C in a nitrogen atmosphere. An aqueous solution of 3 g of potassium persulfate previously dissolved in 50 g of deionized water was added dropwise to the flask over a period of 2 hr. Separately, 60 g of styrene, 10 g of methacrylic acid, 130 g of tridecyl methacrylate, and 10 g of the fluorescent colorant A were added to a solution of 5 g of sodium dodecylbenzenesulfonate dissolved in 200 g of deionized water, followed by stirring to prepare an emulsion. This emulsion was added dropwise to the flask over a period of 2 hr, and the polymerization was terminated 5 hr after the completion of the dropwise addition of the emulsion. pH of the system was then adjusted by the addition of aqueous ammonia as a neutralizing agent, followed by filtration through a 0.4-µm filter. The filtrate was diluted with distilled water to bring the concentration of the polymeric fine particles to 30%. Thus, a polymer emulsion containing polymeric fine particles as dispersed particles was prepared. This polymer emulsion had a minimum film-forming temperature of about -5°C.

### Ink compositions

The following ink compositions were prepared. In the preparation of each ink composition, the ingredients were mixed together according to a formulation specified in the following table. The mixture was stirred for 5 hr, and then subjected to suction filtration through a 0.4-µm membrane filter.

| Ink 1 | |
|---|---|
| Fluorescent colorant EG-302 | 3 wt% |
| Fine particles of polymer prepared in Preparation 1 | 5 wt% |
| Glycerin | 15 wt% |
| Triethylene glycol monobutyl ether | 5 wt% |
| Olfine 1010 | 1 wt% |
| Pure water | Balance |

| Ink 2 | |
|---|---|
| Fine particles of polymer prepared in Preparation 2 (fluorescent colorant) | 3 wt% |
| Glycerin | 15 wt% |
| Triethylene glycol monobutyl ether | 5 wt% |
| Olfine 1010 | 1 wt% |
| Pure water | Balance |

| Ink 3 | |
|---|---|
| Fine particles of polymer prepared in Preparation 2 (fluorescent colorant) | 3 wt% |
| C.I. Direct Yellow 142 | 3 wt% |
| Glycerin | 15 wt% |
| Triethylene glycol monobutyl ether | 5 wt% |
| Olfine 1010 | 1 wt% |
| Pure water | Balance |

| Ink 4 | |
|---|---|
| Fine particles of polymer prepared in Preparation 2 (fluorescent colorant) | 3 wt% |
| C.I. Direct Yellow 73 | 3 wt% |
| Styrene/maleic acid copolymer (molecular weight 40,000, acid value 80) | 1 wt% |
| Glycerin | 15 wt% |
| Triethylene glycol monobutyl ether | 5 wt% |
| Olfine 1010 | 1 wt% |
| Pure water | Balance |

| Ink 5 | |
|---|---|
| Fine particles of polymer prepared in Preparation 3 (fluorescent colorant) | 3 wt% |
| Glycerin | 15 wt% |
| Triethylene glycol monobutyl ether | 5 wt% |
| Olfine 1010 | 1 wt% |
| Pure water | Balance |

| Ink 6 | |
|---|---|
| Fine particles of polymer prepared in | |
| Preparation 3 (fluorescent colorant) | 3 wt% |
| C.I. Direct Yellow 142 | 3 wt% |
| Glycerin | 15 wt% |
| Triethylene glycol monobutyl ether | 5 wt% |
| Olfine 1010 | 1 wt% |
| Pure water | Balance |

| Ink 7 | |
|---|---|
| Fluorescent colorant EG-302 | 3 wt% |
| Glycerin | 15 wt% |
| Triethylene glycol monobutyl ether | 5 wt% |
| Olfine 1010 | 1 wt% |
| Pure water | Balance |

### Evaluation 1: Light emission

Images were printed using the inks thus obtained on the following recording media by means of an ink jet printer PM-700 C, manufactured by Seiko Epson Corporation. An excitation light having a wavelength of 350 nm was applied to the images to observe the state of light emission.

### Evaluation 2: Rubbing/scratch resistance

Characters were printed using the inks on the following recording media by means of an ink jet printer PM-700 C, manufactured by Seiko Epson Corporation. The prints thus obtained were air dried for 24 hr, and the printed characters were then rubbed with a water-base fluorescent marker pen (ZEBRA PEN 2 (trademark)) manufactured by ZEBRA at a marking force of 4.9 x 10⁵ N/m². Thereafter, an excitation light having a wavelength of 350 nm was applied to the images to observe the state of light emission. The results were evaluated as follows.

Recording media used in the evaluation were as follows.
① Xerox P (Xerox Corp.)
② Ricopy 6200 (Ricoh Co. Ltd.)
③ Xerox 4024 (Xerox Corp.)

A: After rubbing three times, light emission spots were observed within the printed area.

B: After rubbing twice, light emission spots were observed within the printed area, whereas after rubbing three times, light emission spots were observed in portions other than the printed area.

C: After rubbing once, light emission spots were observed within the printed area, whereas after rubbing twice, light emission spots were observed in portions other than the printed area.

D: After rubbing once, light emission spots were observed in portions other than the printed area.

### Evaluation 3: Anti-clogging property

The ink was loaded into an ink jet printer MJ-700V2C (manufactured by Seiko Epson Corporation), and alphameric characters were continuously printed for 10 min. Thereafter, the printer was stopped, and allowed to stand for one week without capping under an environment of room temperature (25°C) and humidity 40%. After the standing, alphameric characters were printed again to determine the number of cleaning operations necessary for print quality equal to that before the standing to be obtained. The results were evaluated according to the following criteria.

A: Print quality equal to the initial print quality could be obtained after 0 to 2 cleaning operations.

B: Print quality equal to the initial print quality could be obtained after 3 to 5 cleaning operations.

C: Print quality equal to the initial print quality could not be obtained even after 6 or more cleaning operations.

### Evaluation 4: Ejection stability

50 cc of the ink was placed in a glass bottle. The bottle was hermetically sealed, and then allowed to stand at room temperature (25°C) for one week. At the end of this storage period, the ink was inspected for a change in viscosity and the presence of foreign matter (sediment). The results were evaluated according to the following criteria.

A: Foreign matter was absent, and there was no change in viscosity.

B: There was a change in viscosity although foreign matter was absent.

C: Foreign matter was present.

**Table 1**

| | Ink 1 | Ink 2 | Ink 3 | Ink 4 | Ink 5 | Ink 6 | Ink 7 |
|---|---|---|---|---|---|---|---|
| Evaluation 1: Light emission | Good | Good | Good | Good | Good | Good | Weak |
| Evaluation 2: Rubbing/scratch resistance | A | A | A | A | A | A | D |
| Evaluation 3: Anti-clogging property | A | A | A | A | A | A | A |
| Evaluation 4: Storage stability | A | A | A | A | A | A | - |

## Claims

1. A fluorescent ink composition comprising: a fluorescent colorant; water; a water-soluble organic solvent; and polymeric fine particles having a film-forming property.

2. The fluorescent ink composition according to claim 1, wherein the fluorescent colorant is colorless in the state of exposure to visible light and the fluorescent ink composition further comprises a colorant which is colored in the state of exposure to visible light.

3. The ink composition according to claim 1 or 2, which contains the fluorescent colorant and the polymeric fine particles are present in a state that the fluorescent colorant and the polymeric fine particles exist individually.

4. The ink composition according to claim 1, wherein the fluorescent colorant is present in the physically mixed state in the polymeric fine particles.

5. The ink composition according to claim 1 or 2, wherein the fluorescent colorant has been chemically bonded to a polymer constituting the polymeric fine particles.

6. The ink composition according to any one of claims 1 to 5, wherein the polymeric fine particles have a minimum film-forming temperature of 30°C or below.

7. The ink composition according to claim 6, wherein the water-soluble organic solvent has a boiling point of 180°C or above.

8. The ink composition according to any one of claims 1 to 7, wherein the polymeric fine particles comprise a polymer composed mainly of a thermoplastic polymer.

9. The ink composition according to claim 8, wherein the thermoplastic polymer is selected from the group consisting of poly(meth)acrylic esters, polystyrenes, (meth)acrylic ester/styrene copolymers, polyvinyl acetates, ethylene/vinyl acetate copolymers, ethylene/(meth)acrylic ester copolymers, polybutadienes, polyisoprenes, polyvinyl chlorides, polyvinylidene chlorides, poly( α -methylstyrene), styrene/butadiene copolymers, (meth)acrylic acid/styrene copolymers, styrene/maleic acid copolymers, styrene/itaconic acid copolymers, styrene/maleic ester copolymers, styrene/itaconic ester copolymers, polyesters, polyurethanes, polysiloxanes, and polyamides.

10. The ink composition according to any one of claims 1 to 9, wherein the polymeric fine particles have a single-particle structure.

11. The ink composition according to claim 10, wherein the polymeric fine particles have a carboxyl, sulfonic acid, amido, amino, or hydroxyl functional group.

12. The ink composition according to any one of claims 1 to 11, wherein the polymeric fine particles have a core/shell structure comprising a core and a shell layer surrounding the core.

13. The ink composition according to claim 12, wherein the shell layer has a carboxyl, sulfonic acid, amido, amino, or hydroxyl functional group.

14. The ink composition according to any one of claims 1 to 13, wherein the polymeric fine particles have a diameter of not more than 0.4 µm.

15. The ink composition according to any one of claims 1 to 14, which is used in ink jet recording.

16. A recording method comprising the step of depositing an ink composition onto a recording medium to perform printing, the ink composition being one according to any one of claims 1 to 14.

17. An ink jet recording method comprising the steps of: ejecting droplets of an ink composition; and depositing the droplets onto a recording medium to perform printing, the ink composition being one according to any one of claims 1 to 14.

18. A record produced by the recording method according to claim 16 or 17.
